Europäisches Patentamt

(19) European Patent Office

Office européen des brevets

(11) Numéro de publication: **0 241 359 B1**

(12) FASCICULE DE BREVET EUROPEEN

(45) Date de publication du fascicule du brevet:
27.06.90

(21) Numéro de dépôt: 87400728.9

(22) Date de dépôt: 02.04.87

(51) Int. Cl.⁵: **B29C 67/14,** B29C 43/18,
B29C 67/18
// (B29K103/04, B29L31:30)

(54) Procédé de réalisation d'un ensemble composite constitué d'au moins une pièce en matériau à base polymère et une pièce en matériau fibreux, et moule pour la mise en oeuvre de ce procédé.

(30) Priorité: 08.04.86 FR 8605002

(43) Date de publication de la demande:
14.10.87 Bulletin 87/42

(45) Mention de la délivrance du brevet:
27.06.90 Bulletin 90/26

(84) Etats contractants désignés:
DE GB IT

(56) Documents cités:
FR-A- 801 539
FR-A- 2 001 781
FR-A- 2 081 926
FR-A- 2 140 536
FR-A- 2 443 912
GB-A- 2 061 175
US-A- 3 096 958

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Gil, René, 4, Mail de l'Europe, F-78170 La
Celle Saint Cloud(FR)
Inventeur: Taillefert, Raymond, 14, rue E. Chabrier,
F-92390 Villeneuve-la-Garenne(FR)

(74) Mandataire: Moncheny, Michel et al, c/o Cabinet
Lavoix 2 Place d'Estienne d'Orves, F-75441 Paris
Cedex 09(FR)

## Description

La présente invention concerne la fabrication d'un ensemble composite constitué d'au moins une pièce en matériau à base de polymère et une pièce en matériau fibreux, disposées côte à côte et solidaires les unes des autres au niveau de leurs bords adjacents. Elle peut s'appliquer par exemple à la fabrication de pièces de carrosserie automobile, telles qu'un capot ou un pavillon.

Les pièces de carrosserie en matériau à base de polymère, telles qu'un capot moteur, sont en général munies sur leur face interne, d'un cadre ou de nervures destiné à augmenter leur rigidité et d'une doublure insonorisante fixée audit cadre.

La doublure insonorisante est réalisée indépendamment du cadre et est ensuite collée ou clippée à celui-ci. Dans le cas le plus courant où la doublure est constituée d'une matière fibreuse telle que des déchets de coton, des fibres de verre, de jute, etc., celle-ci est réalisée par compression-estampage dans un moule. Le cadre est en général réalisé également par moulage, seul ou dans le même moule que le capot proprement dit.

Le réalisation d'un tel capot est actuellement assez longue, donc coûteuse, car elle nécessite la réalisation des divers éléments, capot proprement dit, cadre et doublure insonorisante, puis l'assemblage de ces divers éléments.

On peut réaliser le capot proprement dit et le cadre d'une seule pièce mais cette opération est beaucoup plus longue que le moulage du capot seul, c'est-à-dire sans cadre, en raison de l'épaisseur du matériau au niveau du cadre. En outre, si on réalise le capot et le cadre d'une seule pièce, le cadre se trouve réalisé dans le même matériau que le capot, matériau qui permet d'obtenir un bel état de surface mais qui, en contrepartie, est cher (par exemple une résine polyester sans retrait haute pression).

Une autre solution pourrait consister à réaliser un ensemble composite constitué du cadre et de la doublure insonorisante, puis à assembler l'ensemble au capot proprement dit, par des moyens tels que collage ou clippage. L'invention a précisément pour but la réalisation d'un tel ensemble composite.

Plus généralement, l'invention a pour but de fournir un procédé de fabrication d'un ensemble composite constitué d'au moins une pièce en matériau à base de polymère et une pièce en matériau fibreux, disposées côte à côte et solidaires l'une de l'autre au niveau de leurs bords adjacents.

Selon l'invention, l'ensemble composite est obtenu par moulage du matériau polymère et du matériau fibreux, disposés côte à côte dans un même moule comprenant une partie formant poinçon, une partie formant matrice, dont l'une et/ou l'autre des deux parties comporte un réseau de rainures au niveau des bords à solidariser de telle sorte que, pendant le moulage, le polymère coule dans les rainures et pénètre dans le matériau fibreux au niveau de ces rainures sous l'effet de la fusion du polymère dans le moule chauffé, assurant ainsi la solidarisation des pièces au niveau de leurs bords adjacents.

Dans le procédé selon l'invention on utilise avantageusement comme polymères des polymères thermodurcissables qui sont réticulés pendant le moulage. Des polymères thermoplastiques peuvent cependant être également utilisés. Ces polymères sont de préférence renforcés généralement au moyen de fibres de verre ou de carbone.

On utilise avantageusement un moule dont une seule partie comporte des rainures de sorte que le polymère pénètre dans le matériau fibreux par la face de celui-ci tournée vers ladite partie.

De préférence, la partie ne comportant pas lesdites rainures présente des moyens, tels qu'une nervure pour empêcher le polymère de pénétrer dans le matériau fibreux par la tranche de celui-ci, perpendiculaire aux deux parties du moule.

La pression exercée sur les matériaux pendant le moulage est avantageusement comprise entre $5.10^5$ et $2.10^6$ Pascals.

La température à laquelle sont portés les matériaux pendant le moulage dépend de leur nature, mais est généralement comprise entre 140 et 170°C.

L'invention a également pour objet un moule pour la mise en oeuvre du procédé selon l'invention ainsi qu'un ensemble composite constitué d'au moins une pièce en matériau à base de polymère et une pièce en matériau fibreux obtenu par le procédé ci-dessus.

L'invention est exposée ci-après plus en détail à l'aide de dessins représentant seulement un mode d'exécution.

Sur ces dessins,

- la Fig. 1 est une vue en coupe, selon les lignes I,I des Fig. 2 et 3, d'un moule pour la mise en oeuvre du procédé selon l'invention,
- la Fig. 2 est une vue de dessus de la partie formant matrice du moule de la Fig. 1,
- la Fig. 3 est une vue de dessous de la partie formant matrice du moule de la Fig. 1,
- la Fig. 4 est une vue en coupe, de façon analogue à la Fig. 1, mais à plus grande échelle d'un ensemble composite moulé au moyen du moule de la Fig. 1.

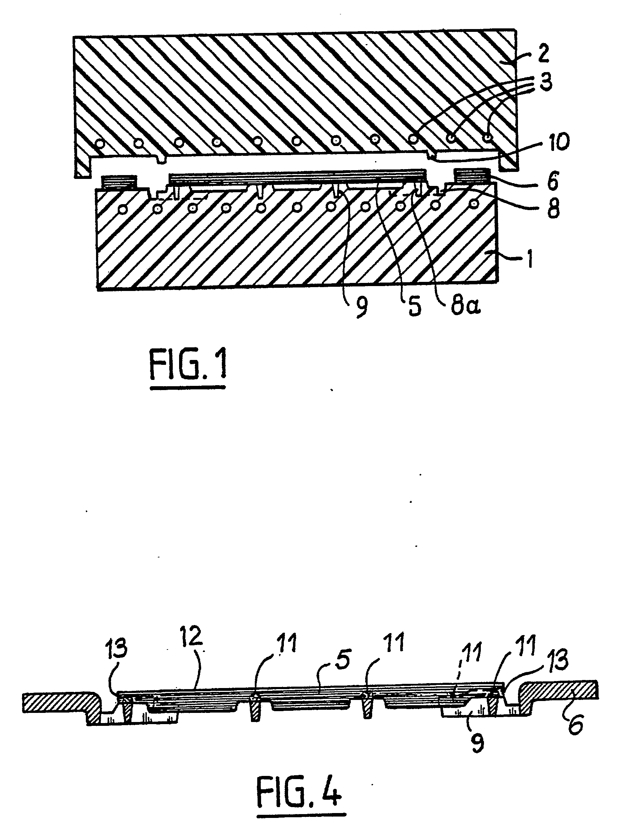

Le moule représenté sur les figures 1, 2 et 3 est constitué, de façon, classique, d'une partie inférieure ou poinçon 1 et d'une partie supérieure ou matrice 2. Il comporte des moyens de chauffage des deux parties 1 et 2 du moule, constituée par exemple par des résistances 3. Alors que le poinçon 1 est fixe, des moyens classiques, tels qu'un vérin non représenté, permettent de déplacer la matrice 2 verticalement de façon à exercer une pression sur les matériaux à mouler, positionnés sur le poinçon 1.

Les matériaux à mouler sont ici constitués d'un matériau fibreux 5 constituant un carré et d'un matériau à base de polymère 6 constituant un cadre carré de dimensions internes légèrement supérieures à celles du carré 5. Les matériaux 5 et 6 sont avant moulage, comme représentés sur la figure 1, constitués de feuilles empilées les unes sur les autres.

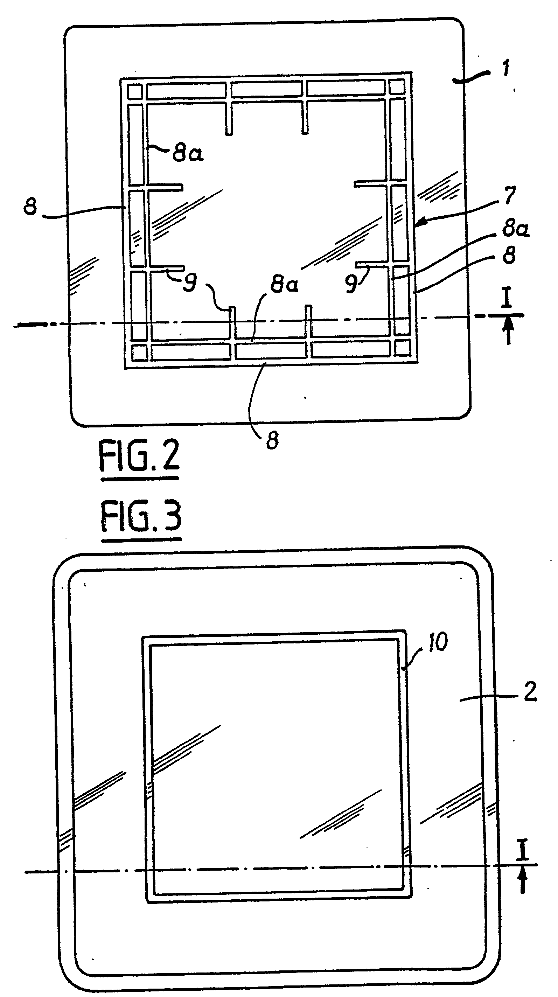

Comme représenté sur la Fig. 2 le poinçon 1 comporte un réseau 7 de rainures 8, 8a et 9 situées au niveau de l'espace entre les deux matériaux 5 et 6 et au droit de la bordure du matériau fibreux 5. Ce réseau 7, de forme générale carrée, comporte deux rainures de forme carrée 8 et 8a, la rainure 8 étant située au niveau de l'espace entre les deux matériaux 5 et 6 et la rainure 8a au droit de la bordure du matériau fibreux 5. Les rainures 9 sont perpendiculaires aux rainures 8 et 8a qu'elles traversent.

Comme représenté sur la Fig. 3 la matrice 2 comporte une nervure 10 qui a la forme d'un carré de dimensions légèrement supérieures aux dimensions du carré constitué par la rainure 8a mais légèrement inférieures aux dimensions du carré constitué par la rainure 8.

Pour réaliser un ensemble composite constitué, dans l'exemple décrit, d'un cadre 6 en matériau à base de polymère tel qu'un polyester non saturé ou une résine phénolique, et d'une pièce carrée 5 en matériau fibreux disposée à l'intérieur du cadre 6, le carré 5 et le cadre 6 étant solidaires l'un de l'autre au niveau de leurs bords adjacents, on dispose le matériau fibreux 5 sur le poinçon 1 de façon qu'il couvre la rainure 8a et le matériau polymère 6 de façon qu'il encadre le réseau 7, comme cela est représenté sur la figure 1.

On porte alors les deux parties 1 et 2 du moule à une température comprise entre 140 et 170°C, de préférence à 150°C, au moyen des résistances 3, puis on actionne le vérin de façon à déplacer la matrice 2 vers le poinçon 1, et à exercer sur les matériaux 5 et 6 une pression comprise entre 5 et 20 bars, soit entre $5.10^5$ et $2.10^6$ Pascals, de préférence 1, $5.10^6$ Pascals. La durée pendant laquelle cette pression doit être exercée peut être comprise entre 60 et 70 secondes.

On se reportera maintenant à la figure 4 qui montre l'ensemble composite obtenu après moulage des matériaux 5 et 6 de la figure 1. Au cours du moulage, le matériau polymère a flué dans les rainures 8, 8a et 9, et a pénétré dans le matériau fibreux 5 au droit des rainures 8a et 9. On a repéré par 11 les zones d'interpénétration des deux matériaux. Les zones 11 ont une épaisseur inférieure à l'épaisseur du matériau 5 après moulage, de sorte qu'elles n'apparaissent pas sur la face supérieure 12 du matériau 5. Elles n'apparaissent pas non plus sur la tranche 13 du matériau 5 car la nervure 10 a empêché le matériau polymère d'accéder à celle-ci pendant le moulage.

Le procédé de moulage et le moule permettant sa mise en oeuvre, qui viennent d'être décrits, présentent des avantages substantiels : ils permettent de réaliser en une seule opération de moulage, dont le cycle est court, un ensemble composite constitué de deux pièces distinctes solidaires au niveau de leurs bords adjacents, alors qu'un tel ensemble était réalisé jusqu'à présent par deux opérations de moulage distinctes et une opération d'assemblage. Outre le gain de temps, donc de coût, réalisé, la qualité de l'assemblage se trouve améliorée par rapport au collage ou au clippage, en raison de l'interpénétration des deux matériaux.

Bien entendu, l'invention n'est pas limitée au mode de réalisation qui vient d'être décrit. Elle peut s'appliquer à la réalisation de tout ensemble composite constitué d'une ou plusieurs pièces en matériau fibreux, disposées côte à côte, quelles que soient la forme et la disposition des pièces les unes par rapport aux autres, la forme du réseau de rainures du moule étant bien sûr adaptée à chaque ensemble composite à réaliser.

Le polymère utilisé doit bien sûr être compatible avec le matériau fibreux. Il doit être susceptible d'être moulé dans les mêmes conditions que le matériau fibreux, donc dans les plages de pression et de température indiquées ci-dessus.

## Revendications

1. Procédé de fabrication d'un ensemble composite constitué d'au moins une pièce en un matériau à base de polymère (6) et une pièce en matériau fibreux (5), disposées côte à côte et solidaires l'une de l'autre au niveau de leurs bords adjacents, caractérisé en ce que l'on effectue un moulage du matériau à base de polymère (6) et du matériau fibreux (5), disposés côte à côte dans un même moule, comprenant une partie formant poinçon (1) et une partie formant matrice (2) dont l'une et/ou l'autre des deux parties comporte un réseau de rainures (7) au niveau des bords à solidariser, de sorte, que pendant le moulage, le polymère coule dans les rainures (8, 8a, 9) et pénètre dans le matériau fibreux (5) au niveau de ces rainures (8, 8a, 9) sous l'effet de la fusion du polymère dans le moule chauffé, assurant ainsi la solidarisation des pièces au niveau de leurs bords adjacents.

2. Procédé selon la revendication 1, caractérisé en ce que l'on utilise un moule dont une seule partie (1) comporte des rainures (8, 8a, 9) de sorte que le polymère pénètre dans le matériau fibreux (5) par la face de celui-ci tourné vers ladite partie.

3. Procédé selon la revendication 2, caractérisé en ce que l'on utilise un moule dont la partie (2) ne comportant pas les rainures présente des moyens tels qu'une nervure (10) pour empêcher le polymère de pénétrer dans le matériau fibreux (5) par la tranche (13) de celui-ci.

4. Procédé selon la revendication 1, caractérisé en ce que le matériau à base de polymère forme un cadre autour du matériau fibreux (5).

5. Procédé selon l'une quelconque des revendications 1 à 4, caractérisé en ce que l'on effectue le moulage à une pression de $5.10^5$ à $2.10^6$ Pa.

6. Procédé selon l'une quelconque des revendications 1 à 5, caractérisé en ce que le moulage est effectué à une température de 140 à 170°C.

7. Moule constitué d'une partie formant poinçon (1) et d'une partie formant matrice (2) pour la mise en œuvre d'un procédé selon l'une quelconque des revendications 1 à 6, caractérisé en ce que l'une et/ou l'autre des deux parties comporte un réseau de rainures (7) au niveau des bords à solidariser de telle sorte que, pendant le moulage, le matériau polymère coule dans les rainures (8, 8a, 9) et pénètre dans le matériau fibreux (5) au niveau de ces rainures.

8. Moule selon la revendication 7, caractérisé en ce qu'une seule des deux parties du moule comporte des rainures (8, 8a, 9), de sorte que le matériau polymère pénètre dans le matériau fibreux (5) par la face de celui-ci tournée vers ladite partie.

9. Moule selon la revendication 7 ou la revendication 8, caractérisé en ce que des moyens, tels qu'une nervure (10), sur la partie (2) ne comportant pas lesdites rainures, sont prévus pour empêcher le polymère de pénétrer dans le matériau fibreux (5) par la tranche (13) de celui-ci.

## Patentansprüche

1. Verfahren zur Herstellung eines Verbundaufbaus, welcher wenigstens aus einem Teil aus einem Material auf Polymerbasis (6) und einem Teil aus Fasermaterial (5) gebildet ist, die nebeneinanderliegend angeordnet und an ihren benachbarten Rändern fest miteinander verbunden sind, dadurch gekennzeichnet, daß man eine Formung des Materials auf Polymerbasis (6) und des Fasermaterials (5) durchführt, die nebeneinander in der gleichen Form angeordnet sind, welche einen Stempel (1) bildenden Teil und einen eine Matrize (2) bildenden Teil umfaßt, von denen der eine und/oder der andere der beiden Teile ein Netz von Rinnen (7) auf Höhe der zu verbindenden Ränder aufweist, so daß das Polymer beim Formen unter der Wirkung des Schmelzens des Polymers in der erwärmten Form in die Rinnen (8, 8a, 9) fließt und in das Fasermaterial (5) auf Höhe dieser Rinnen (8, 8a, 9) eindringt und so die Verbindung der Teile auf Höhe ihrer benachbarten Ränder gewährleistet.

2. Verfahren nach Anspruch 1, dadurch gekennzeichnet, daß man eine Form verwendet, bei welcher ein einziger Teil (1) Rinnen (8, 8a, 9) aufweist, so daß das Polymer in das Fasermaterial ( 5 ) über die diesem Teil zugekehrte Seite desselben eindringt.

3. Verfahren nach Anspruch 2, dadurch gekennzeichnet, daß man eine Form verwendet, deren die Rinnen nicht aufweisender Teil (2) Mittel, wie eine Rippe (10), aufweist, um zu verhindern, daß das Polymer in das Fasermaterial (5) über die Schnittfläche (13) desselben eindringt.

4. Verfahren nach Anspruch 1, dadurch gekennzeichnet, daß das Material auf Polymerbasis einen Rahmen um das Fasermaterial (5) herum bildet.

5. Verfahren nach irgendeinem der Ansprüche 1 bis 4, dadurch gekennzeichnet, daß man das Formen bei einem Druck von $5.10^5$ bis $2.10^6$ Pa durchführt.

6. Verfahren nach irgendeinem der Ansprüche 1 bis 5, dadurch gekennzeichnet, daß das Formen bei einer Temperatur von 140 bis 170°C durchgeführt wird.

7. Form, welche aus einem einen Stempel (1) bildenden Teil und einem eine Matrize (2) bildenden Teil aufgebaut ist, zur Durchführung des Verfahrens nach irgendeinem der Ansprüche 1 bis 6, dadurch gekennzeichnet, daß der eine und/oder andere der beiden Teile ein Netz von Rinnen (7) auf Höhe der zu verbindenden Ränder aufweist, so daß beim Formen das Polymermaterial in die Rinnen (8, 8a, 9) fließt und in das Fasermaterial (5) auf Höhe dieser Rinnen eindringt.

8. Form nach Anspruch 7, dadurch gekennzeichnet, daß ein einziger der beiden Teile der Form Rinnen (8, 8a, 9) aufweist, so daß das Polymermaterial in das Fasermaterial (5) über die diesem Teil zugekehrte Seite eindringt.

9. Form nach Anspruch 7 oder Anspruch 8, dadurch gekennzeichnet, daß Mittel, wie eine Rippe (10), auf dem die Rinnen nicht aufweisenden Teil (2) vorgesehen sind, um zu verhindern, daß das Polymer in das Fasermaterial (5) über die Schnittfläche (13) desselben eindringt.

## Claims

1. A method for producing a composite unit constituted by at least one piece of a polymer based material (6) and one piece of a fibrous material (5), disposed side by side and fixed to each other in the region of their adjacent edges, characterized in that the polymer based material (6) and the fibrous material (5) are moulded together disposed side by side in the same mould comprising a part forming a punch die (1) and a part forming a die (2), whereof one and/or the other of the two parts comprises a network of grooves (7) in the region of the edges to be fixed together, so that during the moulding, the polymer flows into the grooves (8, 8a, 9) and penetrates into the fibrous material (5) in the region of these grooves (8, 8a, 9) under the effect of the melting of the polymer in the heated mould, thus ensuring that the pieces are fixed together in the vicinity of their adjacent edges.

2. A method according to claim 1, characterized in that a mould is used whereof only one part (1) comprises grooves (8, 8a, 9) so that the polymer penetrates into the fibrous material (5) through the face of the latter turned towards the said part.

3. A method according to claim 2, characterized in that a mould is used whose part (2) without the grooves has means such as a rib (10 ) to prevent the polymer from penetrating into the fibrous material (5) through the section (13) of the latter.

4. A method according to claim 1, characterized in that the polymer based material forms a frame round the fibrous material (5).

5. A method according to any one of claims 1 to 4 characterized in that the moulding is effected at a pressure of $5.10^5$ to $2.10^6$ pa.

6. A method according to any one of claims 1 to 5, characterized in that the moulding is effected at a temperature of 140 to 170°C.

7. A mould constituted by a part forming a punch die (1) and a part forming a die (2) for the implementation of a method according to any one of claims 1 to 6, characterized in that one and/or the other of the two parts comprises a network of grooves (7) in the region of the edges to be fixed together, so that during moulding, the polymeric material flows into the grooves (8, 8a, 9) and penetrates into the fibrous material (5) in the region of these grooves.

8. A mould according to claim 7, characterized in that only one of the two mould parts comprises grooves (8, 8a, 9) so that the polymeric material penetrates into the fibrous material (5) through the face of the latter turned towards the said part.

9. A mould according to claim 7 or claim 8, characterized in that means such as a rib (10) on the part (2) without the said grooves are provided to prevent the polymer from penetrating into the fibrous material (5) through the section (13) of the latter.

FIG.1

FIG.4

FIG.2

FIG.3